# DEMANDE DE BREVET EUROPEEN

(11) **EP 0 872 973 A1**
(43) Date de publication de la demande: **21.10.1998**
(21) Numéro de dépôt: 98400852.4
(22) Date de dépôt: 08.04.1998
(51) Int. Cl.: H04L 1/22

(54) **Système de liaisons de données entre un aéronef et une station au sol, et procédé de survie à une panne**

(30) Priorité: 10.04.1997 FR 9704417
(71) Demandeur: AEROSPATIALE Société Nationale Industrielle, 75781 Paris Cédex 16 (FR)
(72) Inventeur: Camus, Paul, 31700 Blagnac (FR); Rascol, Jérôme, 31830 Plaisance Du Touch (FR)
(74) Mandataire: Signore, Robert

(57) **Abrégé**

La présente invention concerne un système de liaisons de données entre un aéronef et au moins une station terrestre comprenant un segment embarqué, un segment air-sol, un segment terrestre, ces deux derniers segments étant constitués par des sous-réseaux, interconnectés par des routeurs, servant de support à des applications distribuées, le segment embarqué comprenant un premier (10) et un second (11) calculateurs d'application. Ces deux calculateurs (10, 11) sont distincts et interchangeables, et reçoivent d'une part les mêmes informations provenant de l'interface (12) avec l'utilisateur embarqué et d'autre part les mêmes informations provenant d'un interface (13) avec le (ou les) processeur(s) (14) d'accès aux sous-réseaux air-sol du côté de l'utilisateur sol.

## Description

### Domaine technique

La présente invention concerne un système de liaisons de données (« Data Link ») entre un aéronef et au moins une station terrestre et un procédé de survie à une panne du calculateur d'application embarqué à bord de cet aéronef, pour permettre le maintien d'une liaison opérationnelle.

### Etat de la technique antérieure

Les autorités responsables du contrôle de la navigation aérienne ont décidé de compléter les moyens de communications vocales classiques par des moyens de communications numériques afin de maintenir le niveau élevé de sécurité qui prévaut aujourd'hui, face à la croissance du trafic aérien.

L'organisation de l'aviation civile internationale (OACI) développe et met en place à cette fin un réseau de télécommunication mondial (ATN) et applique les normes OSI.

Les exigences de performance du système de liaison àe données augmentent dans les zones à fort trafic et la performance de disponibilité devient un objectif majeur.

### RESEAU ACARS

Les compagnies aériennes utilisent aujourd'hui un système de communications numériques entre les avions et leurs centres opérationnels. Ce système appelé ACARS (« Aircraft Communication And Reporting System »), qui est décrit notamment dans les documents référencés [1] et [2] en fin de description, leur sert à échanger des messages concernant les opérations aériennes et des messages à caractère administratif.

Ainsi les avions de la dernière génération sont équipés dans leur grande majorité de ce système ACARS. Ce système, datant d'une quinzaine d'années, est surtout très utile aux compagnies aériennes pour gérer leur flotte en temps réel (maintenance, contrôle opérationnel, optimisation des performances) . Les communications liées au contrôle de la circulation aérienne (ATC) empruntent aujourd'hui essentiellement les liaisons vocales VHF et HF.

L'efficacité du système ACARS pendant cette dernière décennie a conduit les autorités aériennes responsables à étendre son utilisation au contrôle du trafic aérien (ATC). L'utilisation de ce moyen venant en complément des liaisons vocales classiques doit permettre de maintenir le niveau élevé de sécurité qui prévaut aujourd'hui, face à la croissance du trafic aérien.

L'administration américaine FAA (« Federal Aviation Administration ») a d'ores et déjà commencé à introduire ce système de liaison de données dans la région du pacifique sud où le trafic aérien est le moins dense. Ceci est le prélude à un vaste plan d'application du concept FANS (« Future Air Navigation System ») qui regroupe de nouveaux moyens de communication, de navigation et de surveillance (CNS).

Les exigences de performances sont dépendantes des zones de trafic dans le monde : zone océanique, zone domestique, zone terminale, aéroport. Ces exigences sont plus sévères en zone terminale où le trafic est le plus dense et où l'avion se rapproche du sol. Ces performances portent sur le niveau d'intégrité, le taux de disponibilité et les délais de transmission du système.

### RESEAU ATN

Les objectifs de performances associés à des objectifs d'interopérabilité relatifs à des applications distribuées ont conduit l'OACI à définir un réseau aéronautique mondial (ATN) mieux adapté que le système ACARS. Ce réseau ATN est décrit notamment dans le document référencé [3] en fin de description. Les améliorations portent sur l'adaptation des protocoles standards ISO aux réseaux air-sol, et l'utilisation du format de messages « bit-orienté » en remplacement des formats « caractère-orienté ». Ces protocoles sont adaptés à l'échange de données entre systèmes ouverts éloignés (OSI).

Les liaisons de données offrent une capacité de dialogue entre des calculateurs sol et embarqués, qui appartiennent à des organismes différents et autonomes (autorités aériennes, compagnies aériennes, ...). Ces calculateurs proviennent d'un très grand nombre de constructeurs et sont souvent de génération différente. Devant cet état de fait, on définit un ensemble de protocoles de communication standardisés, qui sont implantés, validés et testés sur chacun des équipements voués aux communications de données, de façon à permettre le dialogue entre des calculateurs d'origine différente.

Le choix du moyen de communication doit être transparent à l'application. En effet, les liaisons de données Mode S, Satellite, VHF, HF et « Gate Link » ne sont pas toutes disponibles dans la zone où se trouve l'avion, si bien que pour assurer la continuité du service, il faut que les applications ATC embarquées changent de façon transparente de type de liaison de données au cours de la progression du vol.

En respectant ces contraintes, il est possible de connecter des calculateurs sol ou embarqués, fonctionnant les uns avec les autres, indépendamment de la nature du système de communication (VHF, HF, Satellite, Câble, ..) et sans écrire de programmes spécifiques d'adaptation. C'est le concept du réseau mondial de télécommunications aéronautiques (ATN), basé sur l'interopérabilité des sous-réseaux hétérogènes. L'architecture et les protocoles du réseau ATN adhèrent au modèle de référence « Open Systems Interconnection (OSI) » de l'ISO. Ce modèle est utilisé comme trame de travail pour la définition des services et des protocoles qui sont utilisés dans l'ATN.

Le réseau ATN est défini comme une interconnexion de réseaux de données, capable de fournir un service de communication commun pour les besoins du contrôle de la circulation aérienne (ATSC) et les besoins des compagnies aériennes (AISC). Cette interconnexion peut intégrer et utiliser des réseaux et des infrastructures existantes chaque fois que possible. Le service offert doit répondre aux exigences de la sécurité de fonctionnement et d'accès requises par les applications du contrôle du trafic aérien et des compagnies aériennes, tout en offrant différents niveaux de service.

L'architecture OSI place la responsabilité du routage sur des calculateurs appelés « Routeur », ce qui permet aux systèmes d'extrémités (« End Systems ») d'être déchargés de cette tâche, et ainsi de rester simples. Un système utilisateur de l'ATN, qui peut être n'importe quel équipement allant du système ATC complet jusqu'à un simple ordinateur personnel, accède aux services réseau via un point d'accès. L'accès d'un utilisateur au réseau ATN se fait d'abord par l'intermédiaire d'un sous-réseau, tel qu'un réseau Ethernet ou bien un réseau public X25 (TRANSPAC), qui accède à un routeur ATN (abonné du sous-réseau). Le système utilisateur est directement relié au sous-réseau d'accès (prise physique) et en utilisant ce sous-réseau, il peut communiquer avec le routeur ATN. C'est par le routeur ATN qu'il accède aux services de communications ATN. Le système utilisateur doit donc inclure nécessairement le matériel et le logiciel nécessaire pour utiliser le sous-réseau d'accès. En outre, le système utilisateur doit fournir aussi le protocole réseau sans connexion (« Connectionless Network Protocol » - CLNP) et le protocole (ES-IS) transfert d'information de routage entre les systèmes d'extrémités (ES) et les routeurs (IS), le protocole CLNP étant un protocole simple supportant l'échange de messages appelés « Datagrammes » entre une entité émettrice et une entité réceptrice, et le protocole ES-IS servant à l'identification réciproque des utilisateurs et du routeur d'accès.

Comme tout réseau, le réseau ATN ne peut jamais atteindre cent pour cent de probabilité de livraison, mais il peut s'en rapprocher grâce à la non-utilisation de sous-réseaux de fiabilité faible, grâce à l'augmentation de la capacité de commutation des routeurs et de transmission de sous-réseaux, et grâce à de la redondance dans l'architecture des systèmes.

### MODELE DE COMMUNICATION « Open System Interconnection » (OSI)

Le modèle de communication OSI découpe le processus de communication de données en sept niveaux de services. Chaque niveau de service (ou couche) utilise le niveau de service directement inférieur pour fournir un niveau service de plus haut niveau d'abstraction. Ce type d'organisation présente l'avantage de cacher la structure sous-jacente du système de communication, ce qui permet d'avoir une même interface d'accès aux services de télécommunication pour des systèmes de transmission très différents. Ainsi, une application ATC peut être développée et peut fonctionner en faisant abstraction du type de système de télécommunication utilisé. Aux extrémités du système de communication de données, on trouve les deux calculateurs homologues (« End System » - ES) supportant l'application répartie (un processeur bord et un processeur sol). Entre ces deux systèmes, on trouve un certain nombre de calculateurs intermédiaires (cachés) dont la tâche est de router et de relayer l'information transitant par le réseau. Dans chacun de ces calculateurs, on retrouve un représentant (Entité) de chaque niveau de service. Dans les calculateurs extrémités figurent au minimum les quatre premiers niveaux de services décrits ci-après, alors que dans les calculateurs intermédiaires ne figurent que les trois premiers. Le protocole d'une couche permet à deux entités distantes d'échanger des informations relatives au service fourni par cette couche.

Pour tout système de transmission, il y a un support physique de transmission qui achemine les éléments binaires d'un calculateur à un autre. Les supports physiques peuvent être extrêmement divers : câbles électriques pour les bus 429, faisceaux hertziens pour les communications HF, VHF et satellite, fibres optiques pour les communications embarqués FDDI (OLAN) et liaison infrarouge pour les communications au parking (« Gate Link »).

Les sept couches se répartissent en :
• couches basses (1 à 3) orientées communications
   - La couche physique (couche 1) (niveau bit) a pour objectif de conduire les éléments binaires ou bits jusqu'à leur destination sur le support physique. Elle comprend les interfaces de connexion des équipements informatiques (jonctions) et les modems. Le passage des éléments binaires sur un support physique peut poser des problèmes de continuité de service dus à des perturbations extérieures ; la couche physique se caractérise alors par un taux d'erreurs binaires (BER) qui indique en moyenne le nombre de bits erronés par bit transmis.
   - La couche liaison (couche 2) (niveau trame) a pour but de corriger par retransmission les erreurs qui ont pu se produire au niveau 1, de façon à ce que le taux d'erreurs résiduelles soit meilleur. Elle opère non pas au niveau du bit, mais au niveau de trame de bits par des vérifications de CRC (« Cyclic Redundancy Check »). Cette couche utilise des règles de partage du support physique commun à plusieurs abonnés (adressage, politique d'accès au support).
   - La couche réseau (couche 3) (niveau paquet) intervient dans une structure de communication plus complexe, que l'on trouve au niveau des réseaux de données à commutation de paquets (« Packet Switched Data Network » - PSDN) tels que le réseau TRANSPAC ou le réseau MTN de SITA. Ces réseaux sont constitués de noeuds de commutation reliés par un service de niveau liaison, formant une structure maillée couvrant une surface géographique. Cette structure a le principal avantage d'offrir une redondance des chemins vers un abonné quelconque. Le message que les abonnés du réseau s'échangent constitue un « paquet ». La couche réseau doit donc permettre d'acheminer correctement ces paquets d'information jusqu'à l'utilisateur final, en passant par des noeuds intermédiaires. On trouve à ce niveau trois fonctionnalités principales : l'adressage, le routage et le contrôle de flux. Chaque abonné dispose d'une adresse propre sur le réseau. C'est à ce niveau qu'apparaissent deux philosophies pour l'acheminement des paquets ; le mode connecté et le mode non connecté (ou datagramme).

   Dans le mode connecté, l'abonné émetteur doit prendre préalablement contact avec l'abonné destinataire pour se mettre d'accord avec lui sur les conventions qui vont régir l'échange. Les adresses des émetteurs et des destinataires des messages sont associées pour identifier au niveau de la couche réseau ce que l'on appelle un « circuit virtuel ». Entre ces deux adresses, les paquets circulent de façon ordonnée pour arriver dans le même ordre que celui dans lequel ils ont été émis. Au circuit virtuel est associé un chemin dans le réseau (liste de noeuds) qui est tracé par le paquet d'appel. Chaque noeud concerné par le circuit virtuel mobilise des ressources (mémoires, ...) pour supporter le trafic de paquets. De plus, il connaît le noeud suivant associé au circuit, ce qui fait que les paquets de données n'ont besoin que de très peu d'information concernant leur origine et leur destination. Ce circuit est virtuel, car il se comporte comme un circuit, bien que non matérialisé.
   Dans le mode non connecté, l'abonné émetteur émet un paquet sans avoir à se soucier de l'état et des désirs de l'abonné récepteur. Il utilise la méthode dite du « datagramme ». Chaque paquet est considéré comme indépendant des autres paquets. Dans ce cas, ils peuvent prendre des chemins différents et arriver dans un ordre quelconque ou ne pas arriver du tout au récepteur. Une différence fondamentale avec le mode connecté est que pour un datagramme, il faut fournir l'adresse destination réseau complète, car rien n'est prévu d'avance au niveau des noeuds pour effectuer le routage du paquet.
   Ces deux modes sont présents à tous les niveaux de service du modèle OSI. Cependant un choix a été fait par l'OACI quant à la définition de la couche réseau de l'ATN. Elle offre un service non connecté.
   Les sous-réseaux air-sol sont des extensions des réseaux à commutation de paquets terrestres (X25) pour des abonnés mobiles en l'air. Ils offrent un service sous-réseau en mode connecté. Ainsi, par le sous-réseau satellite AIRCOM du consortium formé par SITA, France Telecom, OTC Limited (Australie) et Teleglobe Canada, il est possible d'établir un circuit virtuel entre un avion situé au-dessus de l'atlantique et un abonné terrestre du réseau TRANSPAC.
• Une couche intermédiaire
   La couche transport (couche 4) est l'ultime niveau de service qui s'occupe de l'acheminement de l'information de bout en bout. Elle est là pour compléter ce qui a été fait par les couches précédentes. Elle doit permettre de donner à l'utilisateur la qualité de service susceptible de le satisfaire. Les différents types de service que l'on peut y trouver vont du simple formatage/déformatage des données pour l'adressage des utilisateurs du service transport jusqu'à des fonctions complexes de reprise sur erreurs et de surveillance de la communication entre les deux extrémités utilisatrices du service transport (service connecté).
• Des couches hautes (5 à 7) tournées vers les besoins applicatifs
   Les couches session (5), présentation (6) et application (7) font partie de l'architecture réseau, mais hors de la communication proprement dite. La couche session s'occupe, comme son nom l'indique, d'ouvrir et de fermer des sessions entre les utilisateurs. La couche présentation se charge de la syntaxe de données transférées entre les utilisateurs du service. Elle procure un langage syntaxique commun à l'ensemble des utilisateurs connectés. La couche application donne au programme utilisateur le moyen d'accéder à l'environnement OSI. Ces trois couches offrent un très grand nombre de services, dont très peu sont utiles pour les besoins de base des communications aéronautiques. D'un autre côté, ces couches de services n'ont pas d'influence sur l'architecture générale embarquée et sur la sécurité des communications.

Une couche peut elle-même se subdiviser en sous-couches. De plus toutes les couches et sous-couches ne sont pas obligatoirement présentes dans un système.

Dans une architecture de communication complexe, telle que l'architecture de réseau aéronautique, les systèmes d'extrémités échangent de l'information au travers de plusieurs sous-réseaux interconnectés au moyen de routeurs. Dans une telle architecture on ne maîtrise ni l'interface d'accès, ni le fonctionnement interne de chacun des sous-réseaux, pas plus que le type et la qualité du service qu'il fournit.

D'après le découpage en couches ISO-OSI, toutes les fonctionnalités d'acheminement au travers de ces sous-réseaux interconnectés appartiennent à la couche réseau (couche 3).

Celle-ci est subdivisée en trois sous-couches :
- une sous-couche de niveau inférieur, qui joue le rôle SNACP (« SubNetwork Access Protocol ») : elle constitue l'interface d'accès, au niveau paquet, à un sous-réseau particulier, dont elle dépend totalement ; elle fournit donc le service spécifique de ce sous-réseau ;
- une sous-couche intermédiaire, qui joue le rôle SNDCP (« SubNetwork Dependent Convergent Protocol ») : elle assure l'adaptation entre les sous-couches SNACP et SNICP, en amenant le service fourni par SNACP au niveau requis par SNICP ;
- une sous-couche de niveau supérieur, qui joue le rôle SNICP (SubNetwork Independent Convergence Protocol ») : elle fournit le service de réseau ISO-OSI à l'utilisateur, en masquant la diversité des sous-réseaux traversés.

Ces trois sous-couches coopèrent afin de fournir le service de réseau ISO-OSI.

### SYSTEME DE LIAISONS DE DONNEES EMBARQUE

Un système de liaisons de données embarqué comprend un segment correspondant au système embarqué sur le mobile (avion;...), un segment air-sol, et un segment terrestre. Ces segments sont constitués par des sous-réseaux interconnectés par des routeurs et servent de support à des applications distribuées.

Dans le contexte du réseau de communication ATN, les applications sont des tâches faisant appel à des services de communication.

Le modèle de liaisons de données embarqué est progressivement implanté en tenant compte de l'environnement opérationnel.

### CONTEXTE DE COMMUNICATION

Le mobile sur lequel est embarqué le système de liaisons de données embarqué se déplace par rapport au réseau terrestre. En conséquence les informations relatives à l'environnement de communication changent au cours de son déplacement sans qu'il ne soit toujours possible de les prévoir. Elles ne peuvent donc pas être obtenues par avance et doivent être acquises au cours d'échanges dynamiques et mises à jour en fonction de la connectivité du moment.

Des services de communication sont disponibles dans des couches empilées suivant le modèle OSI. Chaque couche correspond à un niveau de communication ayant ses protocoles propres.

Pour assurer la gestion du contexte, les entités de chaque niveau doivent identifier successivement les stations radio à portée, les routeurs adjacents et leurs adresses sur des sous-réseaux, les adresses ATN des systèmes d'extrémité contenant les applications distribuées, les routes optimisées traversant les divers domaines de routage ainsi que le nom et l'adresse de ces applications dans les systèmes d'extrémités.

### MACHINES D'ETAT

Le comportement et les interactions entre entités distantes sont définis par des protocoles. Les protocoles sont des règles d'échange en temps réel d'unités de données entre des systèmes ouverts, interactifs et distribués sur le réseau.

Un protocole est matérialisé au moyen d'une machine d'état ou automate qui peut prendre un nombre fini d'états. Son comportement définit complètement la fonctionnalité d'une entité : état des connexions, événements, actions, état résultant.

### PERFORMANCE DE DISPONIBILITE

On définit la disponibilité d'un service de liaisons de données embarqué par la probabilité que la fonction, qu'il est sensé accomplir, cesse d'être disponible pendant son utilisation.

Cet objectif de disponibilité est essentiel lorsque le système de liaisons de données embarqué est utilisé pour l'échange de messages critiques pour la sécurité.

L'objet de l'invention est de permettre la continuité des communications numériques par un système de liaisons de données entre un aéronef et le sol, lorsqu'une panne s'est produite dans le calculateur d'application embarqué, en utilisant des mécanismes de survie des applications à une panne, sans délai, ni impact opérationnel.

Le document référencé [4] en fin de description est un extrait d'un document ARINC récent qui montre que le problème du « transfert » au moment d'une panne est un problème non résolu à ce jour par les experts internationaux, ce document envisageant une approche, basée sur des « échanges » entre calculateurs d'application, fondamentalement différente des mécanismes de survie de l'invention.

### Exposé de l'invention

La présente invention propose un système de liaisons de données entre un aéronef et au moins une station terrestre comprenant un segment embarqué, un segment air-sol, un segment terrestre, ces deux derniers segments étant constitués par des sous-réseaux interconnectés par des routeurs, et servant de support à des applications distribuées, ces applications étant des tâches faisant appel à des services de communication, le segment embarqué comprenant un calculateur d'application, caractérisé en ce que ce segment embarqué comprend un second calculateur d'application, et en ce que les deux calculateurs sont distincts et interchangeables, et reçoivent d'une part les mêmes informations provenant de l'interface avec l'utilisateur embarqué (humain et/ou terminal) et d'autre part les mêmes informations provenant d'un interface avec le (ou les) processeur(s) d'accès aux sous-réseaux air-sol du côté de l'utilisateur sol.

La présente invention concerne également un procédé de survie à une panne comprenant la mise en oeuvre d'un deuxième calculateur d'application, lors d'une panne du calculateur d'application embarqué à bord d'un aéronef, pour permettre le maintien d'une liaison opérationnelle air-sol, caractérisé en ce qu'il comporte les étapes suivantes :
- acquisition en temps réel par le deuxième calculateur des informations qui lui sont nécessaires pour maintenir les connexions pour les communications numériques et les associations d'application pour le dialogue opérationnel ;
- positionnement en temps réel des automates des entités d'application et des entités des couches de communication ;
- commutation, au moment d'une panne, du premier calculateur sur le deuxième calculateur avec maintien des circuits virtuels de communications établis par le premier calculateur avant qu'il ne tombe en panne.

La continuité des services de communications par le système de l'invention entre l'aéronef et le sol est rendue possible par l'emploi de mécanismes de survie des fonctions à une panne, sans délai et sans impact opérationnel.

Des mécanismes de rebouclage permettent aux deux calculateurs d'acquérir en temps réel toutes les informations qui leur permettent d'établir et de maintenir une liaison opérationnelle avec le sol, même après une panne.

La spécificité de l'invention est de permettre aux automates des deux calculateurs d'application de se configurer directement en temps réel.

L'invention offre donc les avantages suivants ;
- survie à une panne, sans rupture de la liaison air-sol, sans délai, ni impact opérationnel ;
- suppression des délais associés au rétablissement d'une liaison numérique air-sol ;
- meilleure intégrité du système grâce au fonctionnement indépendant des systèmes d'extrémité ;
- aucune modification des logiciels de communication OSI, qui sont normalisés.

Les avantages de l'invention sont directement liés à l'augmentation du taux de disponibilité du système de liaisons de données dans l'avion. On peut citer des exemples d'environnement opérationnel où la disponibilité du système se traduit par :
- Un gain de temps (les fréquences sont congestionnées dans des zones à fort trafic vocal). Par exemple l'obtention de la « Departure Clearance » par le système de liaisons de données peut facilement faire gagner 20 mn. La perte du système sur panne bouleverserait la procédure et accroîtrait la perte de temps au lieu de la réduire.
- Un gain de sécurité :
   - les applications (communication/surveillance) par le système de liaisons de données vont permettre de réduire la séparation des avions sur les routes aériennes. La disponibilité du système de liaisons de données est un facteur à la fois d'efficacité opérationnelle et de sécurité dans ce cas. La survie à une panne du système de liaisons de données permet de maintenir le risque de collision au niveau qui a été défini pour la séparation appliquée ; en outre, la perte de la liaison de données sur panne affecte la procédure de gestion du trafic ;
   - transactions pilote/contrôleur : la perte du système de liaisons de données sur une panne affecte le niveau de sécurité si elle se produit au cours d'une transaction (par exemple perte du système de liaisons de données au moment où le contrôleur donne une instruction au pilote telle que : CLIMB TO FL XXX).
- Une intégrité de bout en bout : il y a objectif d'intégrité d'un bout à l'autre de la liaison pour le message transmis. La survie du système de liaisons de données à une panne renforce le respect de cet objectif. L'utilisation du système de liaisons de données dans des zones telles que « Terminal Area » implique un niveau de disponibilité encore accru qui implique aussi la capacité de survie à une panne.

### Brève description des dessins

- Les figures 1, 2 et 3 illustrent le système de l'invention ;
- les figures 4 et 5 illustrent le fonctionnement du système de l'invention.

### Exposé de réalisation

Pour pouvoir survivre à une panne des fonctions du système d'extrémité embarqué, le système de liaison de données selon l'invention entre un aéronef, par exemple un avion, et le sol, comporte un deuxième système d'extrémité embarqué qui a pour objet d'assurer la continuité des services de communication entre l'aéronef et le sol.

La technique d'échange d'informations entre ces deux systèmes d'extrémité ou « cross-talk » présente les difficultés suivantes :
- les informations que le premier système d'extrémité acquiert pour son fonctionnement doivent être transmises au deuxième système d'extrémité avant que la commutation ait lieu ;
- tous les automates du premier système d'extrémité interagissent les uns sur les autres et se positionnent en temps réel suivant les échanges air-sol entre les utilisateurs d'extrémité. Il faudrait donc télécharger les entrées/sorties des automates respectifs situés dans le deuxième système d'extrémité pour qu'ils soient prépositionnés si une commutation avait lieu. Mais cette possibilité de téléchargement impliquerait le développement de logiciels particuliers.

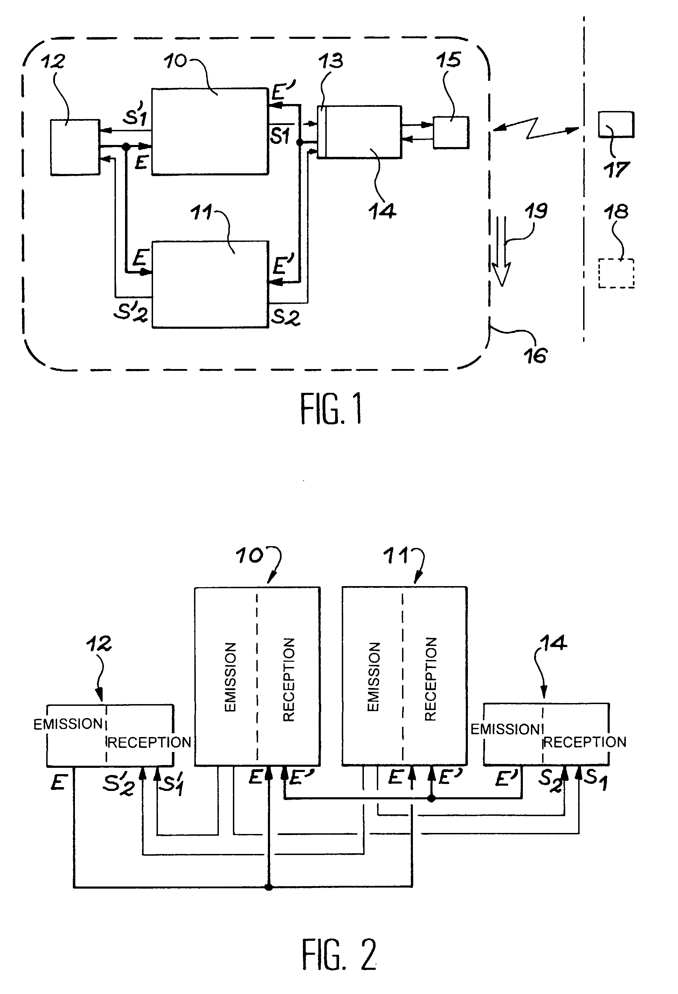

Aussi l'invention, comme illustré sur la figure 1, consiste en une architecture basée sur deux systèmes d'extrémités ou calculateurs distincts et interchangeables 10 et 11 recevant les mêmes informations aussi bien de l'interface embarqué avec l'utilisateur 12 (Interface Homme-Machine) (E), que de l'interface 13 avec le (ou les) calculateur(s) 14 d'accès aux sous-réseaux air-sol du côté de l'utilisateur sol (E'). Sur la figure 1 sont également représentés l'émetteur-récepteur embarqué 15, et deux stations terrestres éloignées 17, 18, le pointillé 16 schématisant l'avion considéré et la flèche 19 représentant le déplacement de cet avion 16.

Les calculateurs 10 et 11 implémentent des processus d'application et des processus de communication qui offrent des services de communication conformément au modèle OSI.

Les deux calculateurs 10 et 11 peuvent communiquer avec un ou plusieurs systèmes homologues situés au sol par l'intermédiaire du (ou des) processeur(s) d'accès aux sous-réseaux air-sol (Satellite, HF, VHF, Mode S, « Gate Link »).

Les informations provenant de l'interface 12 avec l'utilisateur (opérateur humain et/ou terminal) sont transmises aux deux calculateurs 10 et 11. Les unités de données qui sont reçus du sol par le (ou les) processeur(s) d'accès au sous-réseau air-sol sont retransmises aux deux calculateurs 10 et 11.

C'est le premier calculateur 10 qui transmet vers le sol les unités de données qu'il élabore. C'est donc lui qui établit initialement le circuit virtuel de communication avec le sol.

Une telle architecture fournit les mécanismes de rebouclage qui permettent aux deux calculateurs 10 et 11 d'acquérir les mêmes informations du côté de l'interface utilisateur et du côté du sous-réseau. Les automates du second calculateur 11 ont donc des entrées/sorties positionnées en temps réel en fonction des échanges entre les utilisateurs se trouvant aux extrémités de la liaison de données.

Lorsqu'une panne est détectée dans le premier calculateur 10, il cesse ses transmissions sur le réseau et c'est le second calculateur 11 qui transmet sur le réseau à sa place. Le circuit virtuel qui a été établi par le premier calculateur 10 est maintenu par le second.

Le séquencement des données transmises vers le sol est assuré au niveau de la couche sous-réseau.

Le processeur 14 d'accès au sous-réseau air-sol peut faire la discrimination entre le premier et le second calculateur 10 et 11 par leurs adresses respectives et en décodant l'information que chacun d'eux lui transmet sur son état.

Sur la figure 2 sont illustrés les deux calculateurs 10 et 11, l'interface avec l'utilisateur 12, et le processeur 14 d'accès au sous-réseau air-sol, chacun étant représenté avec sa partie émission et sa partie réception pour permettre d'illustrer le flux des informations.

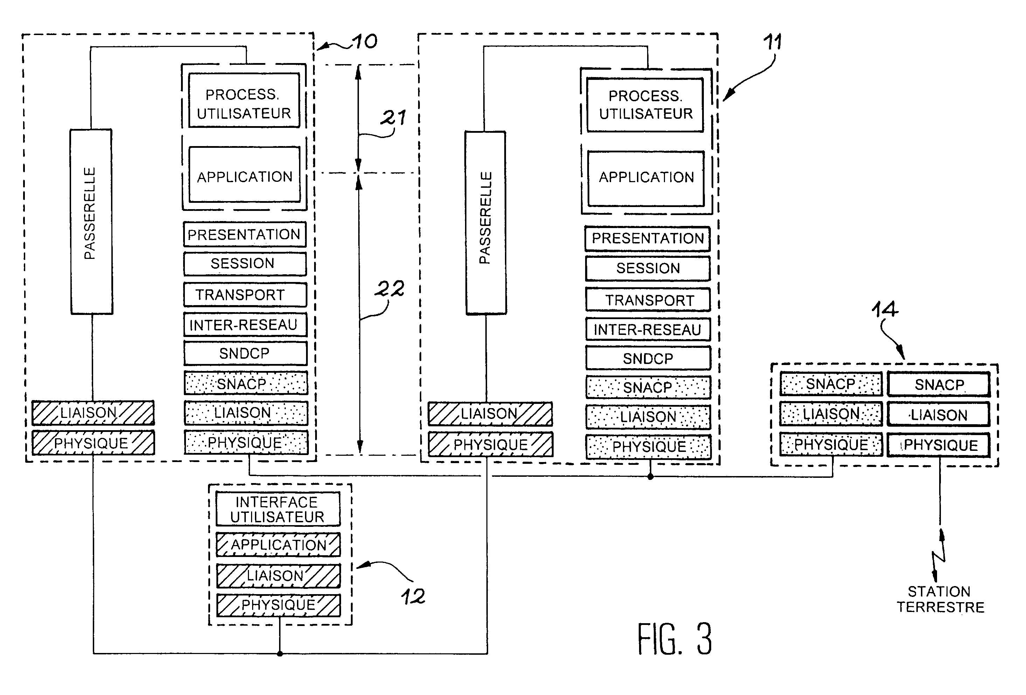

La figure 3 est également une représentation du système de l'invention mais, cette fois-ci, avec une représentation des différentes couches de communication OSI 22 et de l'application bord 21.

Les trois couches les plus basses (en grisé) sont les couches dépendantes de la nature du sous-réseau air-sol utilisé. Les blocs application correspondent à la partie utile pour l'utilisateur.

Des passerelles permettent l'adaptation du message en fonction du terminal utilisateur utilisé.

Les automates des deux calculateurs 10 et 11 peuvent se configurer directement en temps réel, sans délai ni impact opérationnel car sans mécanisme de synchronisation entre eux. Au moment d'une panne, la commutation du premier calculateur 10 sur le second 11 se fait avec maintien des circuits virtuels de communication établis par le premier calculateur 10 avant qu'il ne tombe en panne.

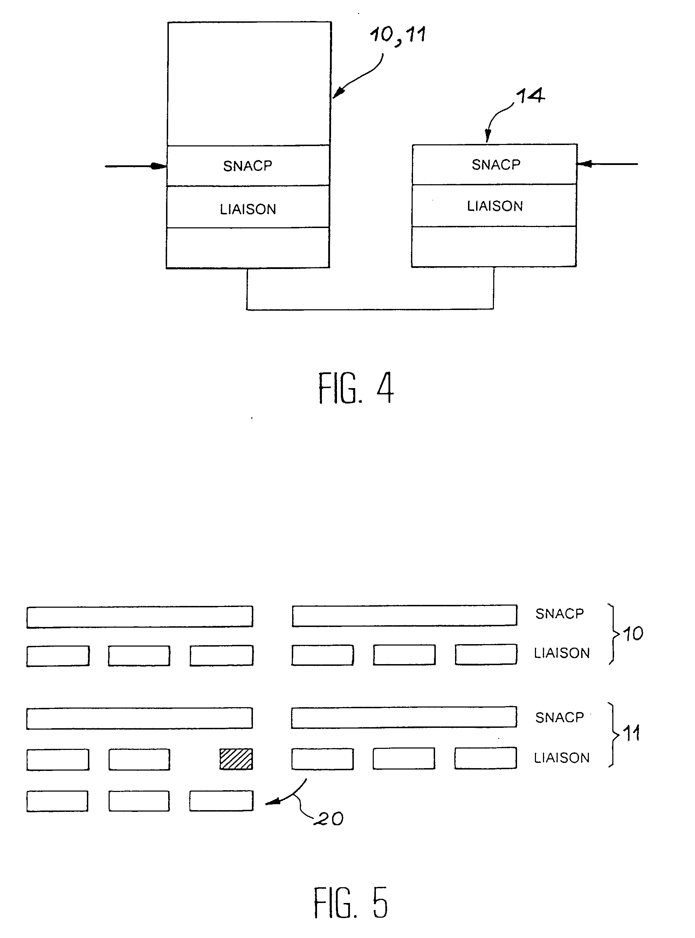

La figure 4 illustre les couches liaison et SNACP du premier (ou du deuxième) calculateur 10(11) et celles du processeur 14 d'accès au sous-réseau air-sol.

On peut imaginer qu'à un instant donné les signaux élaborés par les deux processeurs d'extrémités 10 et 11 puissent être différents (temps de calcul différents).

La couche SNACP échange un paquet de données et la couche liaison trois trames. Il peut y avoir, comme représenté sur la figure 5, une différence de nombre de bits au niveau de la troisième trame (hachures).

Au moment de la commutation du premier au deuxième calculateur il y a détection d'une différence (manque quelques bits dans le cas illustré) et demande de retransmission des trames jusqu'à ce qu'il y ait cohérence (20). Il y a donc une procédure de reprise sur erreur.

Le procédé selon l'invention de commutation du premier calculateur 10 sur le second 11 comporte les étapes suivantes :
- acquisition en temps réel par le second calculateur 11 des informations qui lui sont nécessaires pour maintenir les connexions pour les communications numériques et les associations d'application pour le dialogue opérationnel ;
- positionnement en temps réel des automates des entités d'application et des entités des couches de communication ;
- commutation, au moment d'une panne, du premier calculateur 10 sur le second calculateur 11 avec maintien des circuits virtuels de communication établis par le premier calculateur 10 avant qu'il ne tombe en panne.

La réalisation de l'invention consiste à installer dans l'avion le deuxième calculateur. La nature des informations échangées est décrite ci-dessus : informations de niveau applicatif (ou opérationnel) utilisées par les entités d'application et informations de niveau communications utilisées par les entités de communication. On n'a pas décrit de scénario opérationnel où toutes ces informations seraient mises en oeuvre, car ces transferts n'apparaîtraient pas dans la description étant donné qu'ils sont transparents aux utilisateurs d'extrémités.

### REFERENCES

[1] « ACARS, Aircraft Communication Adressing Reporting System » (SDN ; A340/A330 ; ATA23-24 ; 8 avril 1994).
[2] « Aircom SITA Digital Air-Ground Service System Specification » (Société Internationale de Télécommunications Aéronautiques ; EG/4000 ; révision 2 ; avril 1992).
[3] « Part one/InternetWorking » (Radio Technical Commission For Aeronautics, SC-162 ; D0-205 ; 21 mars 1990).
[4] « ARINC Characteristic 758 » (Draft 4 ; page 25 ; 25 juin 1996).

## Revendications

1. Système de liaisons de données entre un aéronef et au moins une station terrestre comprenant un segment embarqué, un segment air-sol, et un segment terrestre, ces deux derniers segments étant constitués par des sous-réseaux, interconnectés par des routeurs, servant de support à des applications distribuées, le segment embarqué comprenant un premier interface (13) avec au moins un calculateur (14) d'accès au sous réseau air-sol, via un émetteur-récepteur embarqué (15), un calculateur d'application (10), et un second interface (12) avec l'utilisateur, caractérisé en ce que ledit segment embarqué comporte un second calculateur d'application (11) qui reçoit d'une part les mêmes informations que le premier calculateur (10) provenant d'une part du premier interface (13) et d'autre part du second interface (12).

2. Procédé de mise en oeuvre du système selon la revendication 1, comportant les étapes suivantes :
- le premier calculateur (10) établit le circuit virtuel de communication avec le sol ;
- le premier et le second calculateurs (10, 11) acquièrent les mêmes informations du côté du premier interface (13) avec au moins un calculateur (14) d'accès au sous réseau air-sol et du côté du second interface avec l'utilisateur (12) ;
- les deux calculateurs (10, 11) implémentent alors des processus d'application et des processus de communication, qui offrent des services de communication conformément au modèle OSI, les automates des deux calculateurs se configurant directement en temps réel sans délai ni impact opérationnel car sans mécanisme de synchronisation entre eux ;
- lorsqu'une panne est détectée dans le premier calculateur (10), il cesse ses transmissions sur le réseau air-sol et il y a commutation du premier calculateur (10) au second (11) ;
- le second calculateur (11) transmet sur le réseau air-sol à la place du premier, le circuit virtuel établi par le premier calculateur (10) avant la panne étant maintenu par le second, avec la possibilité, au moment de la commutation du premier au second calculateur, de retransmettre des trames (si nécessaire) jusqu'à ce qu'il y ait cohérence.
